# EUROPEAN PATENT SPECIFICATION

(11) **EP 2 822 140 B1**
(45) Date of publication and mention of the grant of the patent: **02.11.2016**
(21) Application number: 13360013.0
(22) Date of filing: 04.07.2013
(51) Int. Cl.: G06F 1/26, H02J 7/00

(54) **Method for power allocation and resource management system**
Verfahren zur Leistungszuweisung und Ressourcenverwaltungssystem
Procédé d'attribution de puissance et système de gestion de ressources

(43) Date of publication of application: 07.01.2015
(73) Proprietor: ALCATEL LUCENT, 92100 Boulogne-Billancourt (FR)
(72) Inventor: Klotzsche, Thomas, 70435 Stuttgart (DE); Hartmann, Detlef, 12099 Berlin (DE); Ilchmann, Frank, 12099 Berlin (DE)
(74) Representative: Berthier, Karine

(56) References cited:
- US-A1- 2006 214 638
- US-A1- 2010 023 940
- US-A1- 2012 176 091

## Description

### TECHNICAL FIELD

Example embodiments relate in general to power allocation and resource management in connection with distributed electrical power storage devices.

### BACKGROUND

Use of renewable energy from sources that are continually replenished, such as sunlight, wind and tidal sources for example, is increasing. However, the fluctuating character of renewable energy production can be problematic. For example, transmission and distribution network operators have to take measures to prevent overload and underload conditions. Energy storage devices can be used to store energy when energy generation exceeds consumption and can also be used to provide stored energy into a network when generation figures are low and a high demand from consumers exists.

Commonly, deployed electrical storage devices (batteries) are directed to one dedicated purpose such as, for example, peak shaving, power grid quality improvement, energy trading, and providing an uninterrupted power supply, and are typically distributed so that they are located at various geographical locations. Users will usually interact with their local grid operator to access such a battery.

On the other hand there are parties (persons, machines, systems) that may use some electrical storage for a limited time with additional requirements such as for example requirements relating to energy storage capacity, power capability, power/energy at a defined location area, power/energy at a detailed position in a grid, special priorities of access to shared storage resources and timing requirements. Such parties can be grid operators or their Energy Management Systems (EMS), automated load-balancing systems, Demand Response (DR) or Demand Side Management (DMS) systems, or traders (persons and/or machines) for example.

US2010023940A1 discloses a virtual machine system in which multiple virtual machines are implemented on a server; and the system includes a virtual battery manager, a discharge calculator, and a discharger. The virtual battery holds electric energy used by the virtual machine. The virtual battery is capable of discharging and being charged. A quota table and a virtual battery management table (specifying a set virtual battery capacity) are used in managing charging and usage.

US2012176091A1 discloses a control apparatus in which a first upper limit (a maximum emission power for the battery operation, according to specifications) and a second upper limit (a maximum value for maintaining the temperature of the NaS battery less than or equal to a maximum temperature) are set for each of multiple NaS batteries. Each of the NaS batteries is separated into two parts - a preferential virtual battery corresponding to capacity up to the first upper limit, and non-preferential virtual battery corresponding to capacity between the first upper limit and the second upper limit. After the emission power is allocated to all the preferential virtual batteries, the emission power is allocated to each of the non-preferential virtual batteries.

### SUMMARY

According to an aspect, there is provided a computer-implemented method for power allocation from multiple distributed power resources, comprising providing a subscriber, registered with an allocation system, with access to a virtual battery allocated a share of physical battery capacity derived from at least one of the multiple distributed power resources, the virtual battery being instantiated on the basis of a capacity allocation request from the subscriber, the capacity allocation request defining the battery capacity the subscriber is seeking. The method can further include authenticating the subscriber with the allocation system, and providing the subscriber with an allocation offer of capacity based on the allocation request. The method can further include generating a measure representing the status of available physical resources from the multiple distributed power resources, and storing the measure as part of the allocation system. The virtual battery can be allocated a share of physical battery capacity from respective ones of a plurality of the multiple distributed power resources. A power resource of the multiple distributed power resources can provide capacity for multiple virtual batteries. The method can further include providing a database of distributed power resources including data representing capacity and capabilities of respective ones of the resources, and augmenting the database with additional resources on the basis of an offer from a registered resource owner. The method can further include testing physical access of the additional resources, and updating the data representing capabilities for the tested resources.

According to an aspect, there is provided a computer program product, comprising a computer usable medium having computer readable program code embodied therein, said computer readable program code adapted to be executed to implement a method for power allocation from multiple distributed power resources as provided above.

According to an aspect, there is provided a resource management system, comprising multiple physical power storage devices to support at least one virtual battery device, the virtual battery device being instantiated in response to subscriber request data, and an authentication engine to control access to the virtual battery device by a subscriber and to enable a resource owner to offer a physical battery capacity derived from at least one of the multiple distributed power resources; wherein the capacity allocation request defines the battery capacity the subscriber is seeking. The system can further include a subscriber side contracting engine to receive the subscriber request data, and check available physical resources based on the request data to determine if a request for allocation of capacity of physical resources can be accommodated. The system can further include a device side contracting engine to receive offers from device owners or their representative software instances as e.g. local energy management systems. These offers can be committed by the device side contracting engine. The device side contracting engine works independently from the subscriber side contracting engine. The system can instantiate the virtual battery device and allocate a share of capacity of one or more of the physical power storage devices to the virtual battery device to accommodate the request for allocation. The system can further include a monitor engine to determine a status of a power storage device and update a database of physical resource capacity. The monitor engine can determine the status of a physical resource in response to data received from a subscriber relating to virtual battery device usage.

### BRIEF DESCRIPTION OF THE DRAWINGS

Embodiments will now be described, by way of example only, with reference to the accompanying drawings, in which:
Figure 1 is a schematic block diagram of a resource management system according to an example;
Figure 2 is a schematic block diagram of a resource management system and method according to an example;
Figure 3 is a schematic block diagram of the device side of a resource management system and method according to an example;
Figure 4 is a schematic block diagram of the subscriber side of a resource management system and method according to an example;
Figure 5 is a flowchart of a method for power allocation according to an example;
Figure 6 is a schematic block diagram of a resource management system and method according to an example;
Figure 7 is a schematic block diagram of a resource management system and method according to an example; and
Figure 8 is a flowchart of a method for power allocation according to an example.

### DESCRIPTION OF EXAMPLE EMBODIMENTS

Example embodiments are described below in sufficient detail to enable those of ordinary skill in the art to embody and implement the systems and processes herein described. It is important to understand that embodiments can be provided in many alternate forms and should not be construed as limited to the examples set forth herein.

Accordingly, while embodiments can be modified in various ways and take on various alternative forms, specific embodiments thereof are shown in the drawings and described in detail below as examples. There is no intent to limit to the particular forms disclosed. On the contrary, all modifications, equivalents, and alternatives falling within the scope of the appended claims should be included. Elements of the example embodiments are consistently denoted by the same reference numerals throughout the drawings and detailed description where appropriate.

The terminology used herein to describe embodiments is not intended to limit the scope. The articles "a," "an," and "the" are singular in that they have a single referent, however the use of the singular form in the present document should not preclude the presence of more than one referent. In other words, elements referred to in the singular can number one or more, unless the context clearly indicates otherwise. It will be further understood that the terms "comprises," "comprising," "includes," and/or "including," when used herein, specify the presence of stated features, items, steps, operations, elements, and/or components, but do not preclude the presence or addition of one or more other features, items, steps, operations, elements, components, and/or groups thereof.

Unless otherwise defined, all terms (including technical and scientific terms) used herein are to be interpreted as is customary in the art. It will be further understood that terms in common usage should also be interpreted as is customary in the relevant art and not in an idealized or overly formal sense unless expressly so defined herein.

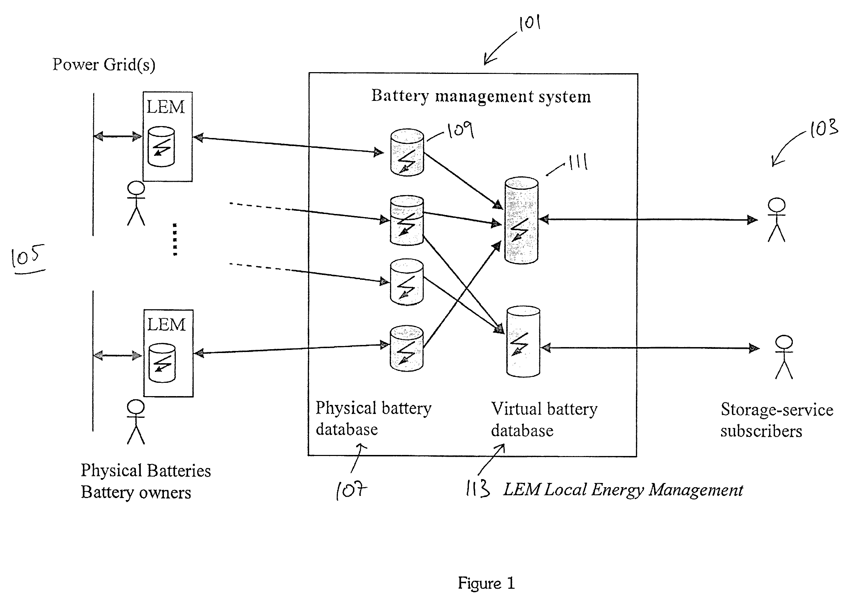

Figure 1 is a schematic block diagram of a resource management system according to an example. A management or allocation system 101 sits between multiple subscribers 103 and multiple physical battery devices 105. System 101 can be implemented on servers, platforms, the cloud, and so on and can be a distributed or centralized system.

A subscriber 103 can communicate with system 101 using a common data network such as the internet for example, and data encryption to protect communications can be provided. According to an example, physical storage devices and distributed power resources 105 such as batteries for example are decoupled from the storage-service subscribers 103 that want to utilize the electrical storage capabilities (virtual storages). Owners of the physical batteries 105 can thus offer their resources to the system 101, either in an automated fashion or with the use of a third party brokerage service for example. The system 101 communicates to Local Energy Management (LEM) units of the physical batteries 105. The system can then group the physical battery resources 105 dynamically together and is therefore able to offer energy storage services independently from single physical battery restrictions to any party (subscriber) who is interested in dealing in electrical storage capabilities. Such parties can be systems that deal with grid stability and grid operators for example, but also traders.

According to an example, system 101 provides a database 107 of physical storage resources 109. Each resource 109 can be distributed - that is, resources can be at different physical locations from one another. The different physical storages 109 (different locations, vendors, and operators) can be combined to form virtual entities 111 that can be stored in a virtual battery database 113. Entities 111 are virtual batteries, or virtual battery devices that can be instantiated for use by subscribers 103. A virtual battery can be instantiated on the basis of a subscriber requirement for example, and can provide a subscriber with capacity from one or more of the physical devices 109. In an example, the capacity of one physical device 109 can be split into smaller parts for use with multiple virtual resources 111.

A virtual battery device 111 can be provided on demand, and splitting and combining of physical resources can be mixed. Also reallocation of storage resources can be provided. In an example, physical storage resource handling is separated from the subscribers of virtual resources. That is the owner/operator is not and need not to be aware of how their resources are used. There is neither a direct communication to storage subscribers nor direct communication between any physical devices. Therefore the operational interface to the physical entities need only use commands, such as those that exist in the local energy management (LEM) of the device, that can be offered over a data network, depicted broadly by the provision of the arrows in figure 1.

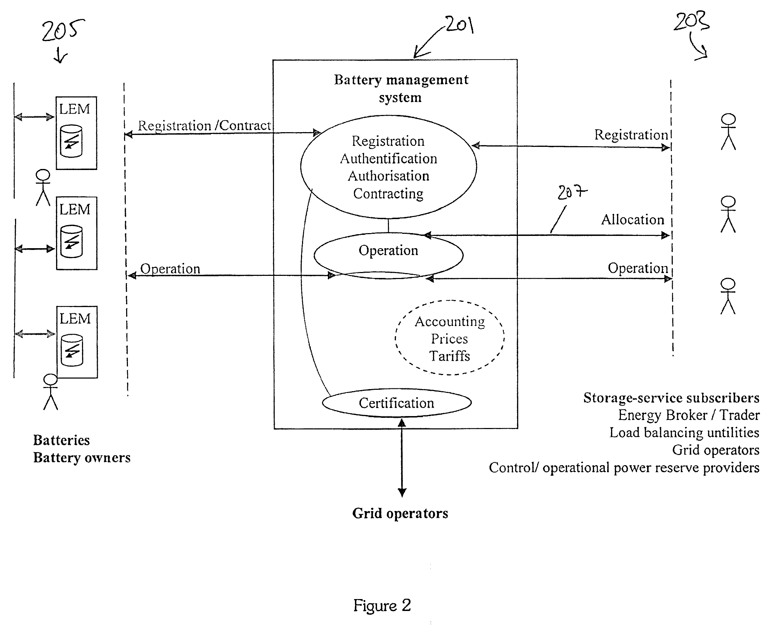

Figure 2 is a schematic block diagram of a resource management system and method according to an example, which gives an overview on the functions and interactions between the functional parts of the system. System 201 operates between subscribers 203 who will utilize a virtual battery device and physical device owners 205. Each party can register with system 201 thereby registering themselves as users (or providers) with the system. The step of registration can include authentication of a party. At 207, a subscriber 203 is allocated power from one or more physical devices via a virtual battery device. The operation of the virtual battery device can be controlled by system 201 based on an allocation that has been requested from a subscriber 203 and provided by one or more operators 205.

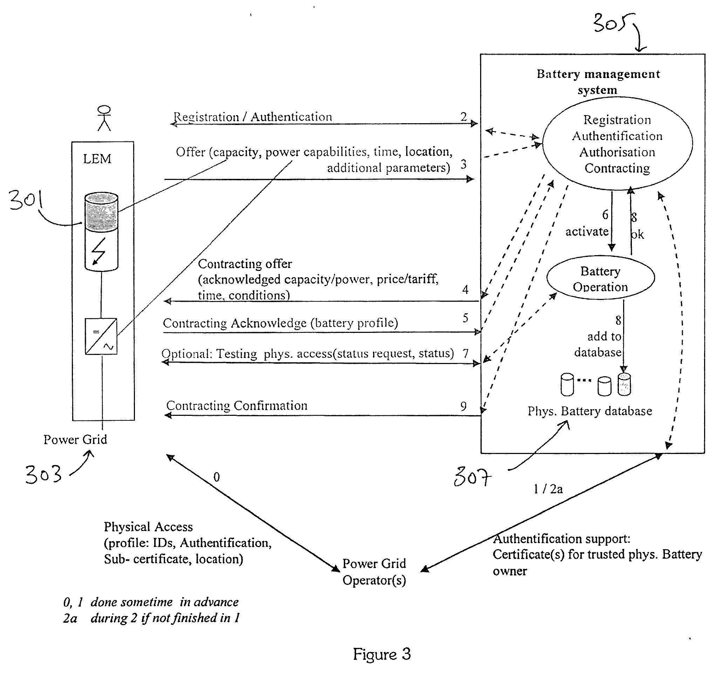

Figure 3 is a schematic block diagram of the device side of a resource management system and method according to an example. A physical battery device 301 is operational connected to the power grid 303. System 305 controls the registration, contracting and offering of capacity from device 301. A registration/authentication process, 2, takes place between system 305 and the local energy management system (LEM) of device 301. An offer is made (3), including an indication of capacity, power capabilities and device location and so on. System 305 can provide a contracting offer (4) in which the parameters that were provided in 3 can be accepted. This can be acknowledged (5) by LEM of device 301 and battery operation can be activated (6) on the basis of the contracted offering. Optionally, physical access to the device 301 can be tested (7) in order to ensure that the offering can be successfully taken up. The system 305 can then add (8) the device 301 to a database of physical devices, and provide contracting confirmation (9). Accordingly, a physical device 301 can be added to a database 307 of system 305 with details of the capabilities of the device, and parameters under which usage of the capacity of the device can be utilized.

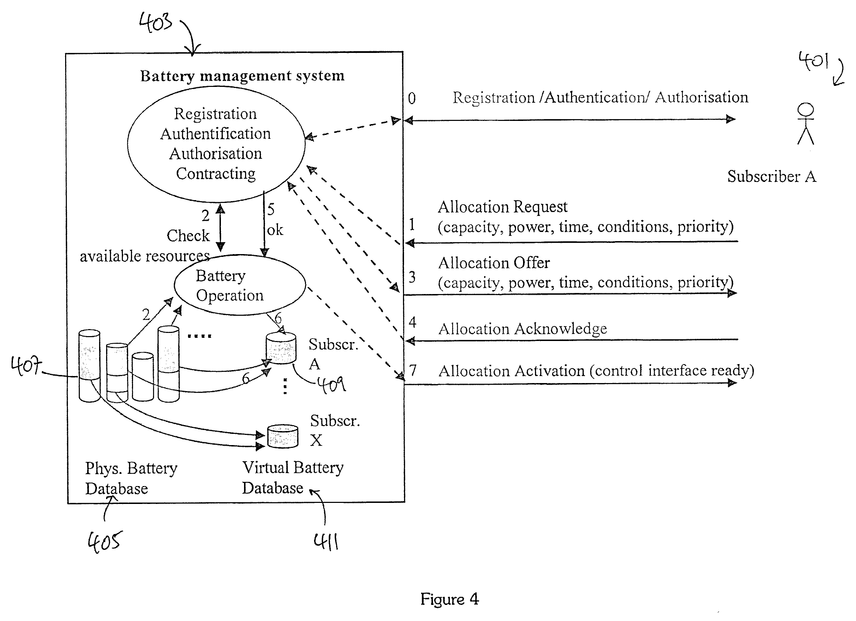

Figure 4 is a schematic block diagram of the subscriber side of a resource management system and method according to an example. Service subscribers first have to go through a registration process (0), which can include authentication/authorization for example. Contracting can then be done either automatically or with the aid of manual support for example on the user/subscriber side. In an example, subscriber 401 generates an allocation request (1) for system 403. The request is a capacity allocation request from the subscriber that defines the capacity that the subscriber is seeking. System 403 uses the request to check against existing physical resources to see if the request can be accommodated. For example, the database of physical resources 405 stores data relating to the physical devices 407, such as their location, capacity and so on. If sufficient resources exist, an offer (3) is made to subscriber 401, which is acknowledged (4) by subscriber 401. If the acknowledgement is in the positive, that is, if the offer is acceptable, an virtual battery 409 can be instantiated that is supported by capacity from one or more of the physical devices for which the system 403 has access. The virtual battery device 409 is part of a database of virtual devices 411 relating to multiple subscribers for example. In an example, the capacity of a virtual battery device can be scaled in response to a request from a subscriber that can be supported by system 403.

In use of virtual battery device 409, a control interface (7) can be provided to enable subscriber 401 to monitor usage of the device 409 for example, and control aspects relating to the device 409.

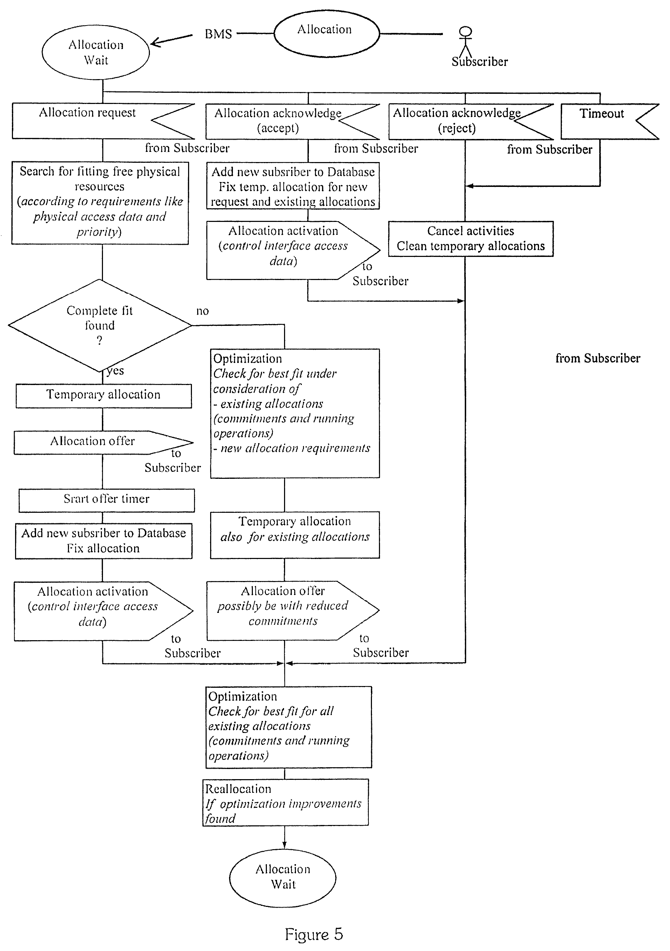

Typically, system 403 will thus find a storage solution that fits best to the subscriber's requirements by combining a set of physical energy storage devices (batteries) into a virtual energy storage device and making an offer to the user. If the user accepts, the operation procedure will be activated. In the case of a mismatch between request and offer, an optimization process can be started in which a best match can be found. This can increase the possible utilization of the storage devices. In this connection, figure 5 is a flowchart of a method for power allocation according to an example, which shows an exemplary process for allocation and optimisation.

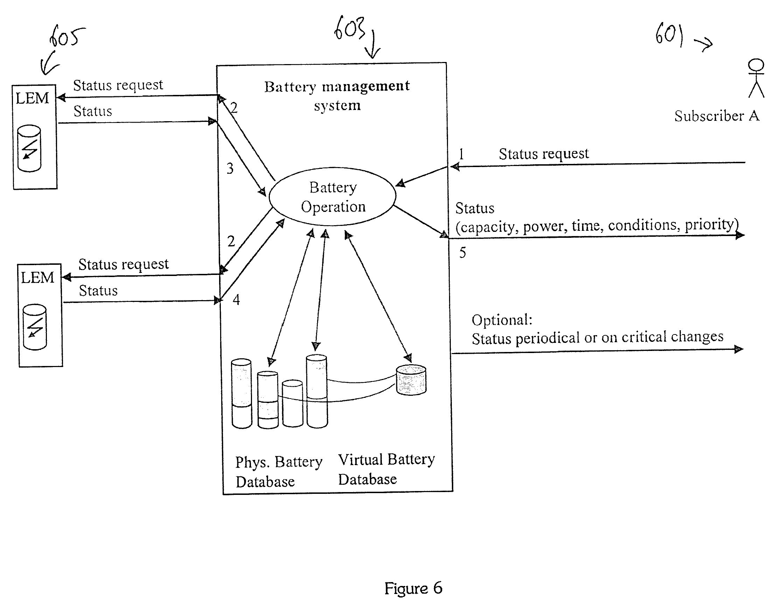

Figure 6 is a schematic block diagram of a resource management system and method according to an example. A storage service user or subscriber 601 can manage his virtual storage according to his needs. The system 603 maps the requests towards the physical batteries 605 and offers monitoring capabilities and status information to the user 601. For example, user 601 can make a status request (1) that can be passed to the control engines of the physical devices 605 from which status data (5) can be provided to the user 601.

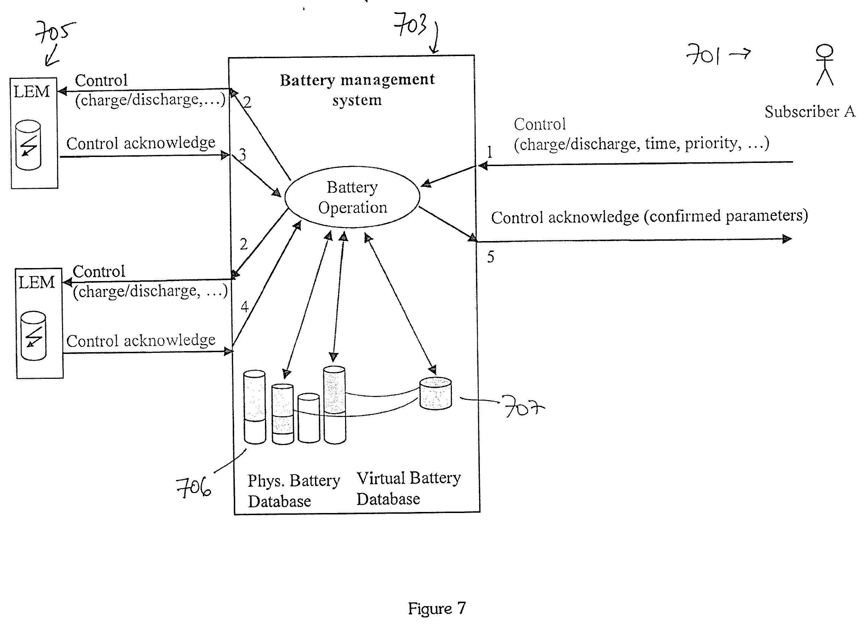

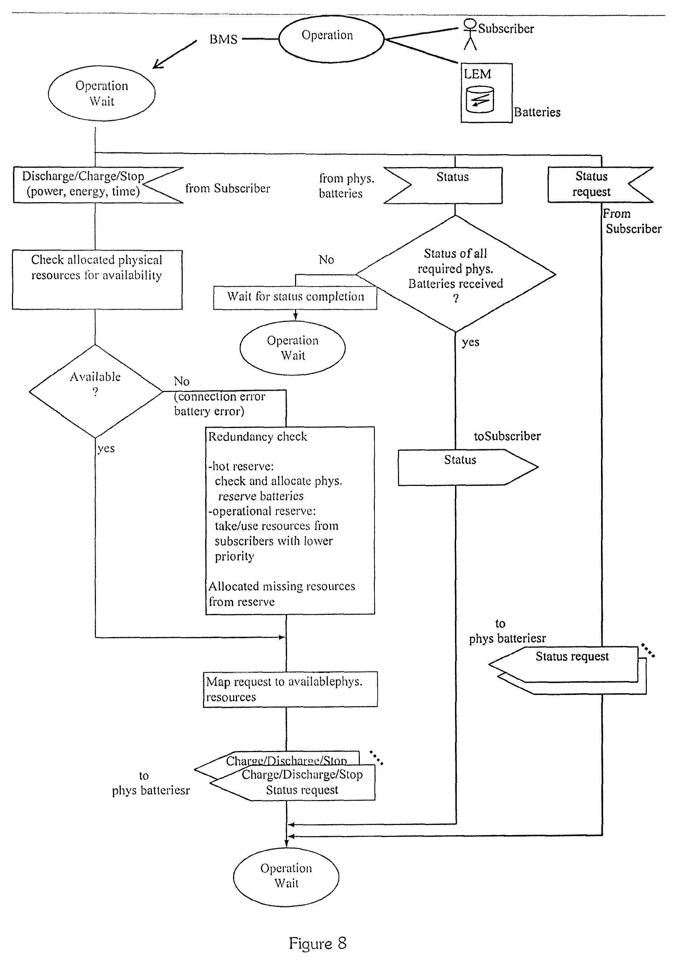

Figure 7 is a schematic block diagram of a resource management system and method according to an example, in which a control request from a user 701 is passed to the control management engines of physical devices 705 to determine certain control parameters associated with the physical devices 707 underlying the virtual device 707 in use by the user 701. The control parameter can include data such as the level of charge in a device 706 for example. In this connection, figure 8 is a flowchart of a method for power allocation according to an example in which the process for a subscriber to check the status of physical resources is shown. In an example, in case of a failure during the operation a "hot reserve" can be activated to fulfill allocations and contracts.

Accordingly, a storage owner is able to offer his storage capacity to a wider circle of subscribers and by this the utilization of the storage is higher. The storage device subscriber is able to select storage capacity from a wider circle of storage devices and by this the selection matches better to the subscribers demand.

Thus, the overall utilization (and by this the efficiency) of the managed storage devices is higher than in case of isolated storage usage. This is achieved by running an optimization process and using small free capacities to 'fund' larger entities. Also the waste of partly allocated storage devices will be used. Free storage capacities of single storage devices can be assigned to different virtual storage entities, thus further enlarging the utilization of storage devices. The redundancy of the overall system is higher, because a cyclic redundancy check and optionally activation of a "hot reserve" can be provided. The cost of the overall system (compared to isolated storage usage) is lower because the available storage capacity can be dynamically shared to different subscribers, and the effort for installing and running such energy management system is low, because it can be integrated in existing management systems.

The present inventions may be embodied in other specific apparatus and/or methods. The described embodiments are to be considered in all respects as illustrative and not restrictive. In particular, the scope of the invention is indicated by the appended claims rather than by the description and figures herein. All changes that come within the meaning and range of equivalency of the claims are to be embraced within their scope.

## Claims

1. A computer-implemented method for power allocation from multiple distributed power resources (105; 205; 303; 605; 705), comprising:
providing a subscriber (103; 203; 401; 601; 701), registered with an allocation system (101; 201; 305; 403; 603), with access to a virtual battery (111; 409) allocated a share of physical battery capacity derived from at least one of the multiple distributed power resources (105; 205; 303; 605; 705), the virtual battery (111; 409) being instantiated on the basis of a capacity allocation request (1) from the subscriber (103; 203; 401; 601; 701), the capacity allocation request (1) defining the battery capacity the subscriber (103; 203; 401; 601; 701) is seeking.

2. A method as claimed in claim 1, further including:
authenticating the subscriber (103; 203; 401; 601; 701) with the allocation system (101; 201; 305; 403; 603); and
providing the subscriber (103; 203; 401; 601; 701) with an allocation offer (3) of capacity based on the allocation request (1).

3. A method as claimed in claim 1 or 2, further including:
generating a measure representing the status (5) of available physical resources from the multiple distributed power resources (105; 205; 303; 605; 705);
storing the measure as part of the allocation system (101; 201; 305; 403; 603).

4. A method as claimed in any preceding claim, wherein the virtual battery (111; 409) is allocated a share of physical battery capacity from respective ones of a plurality of the multiple distributed power resources (105; 205; 303; 605; 705).

5. A method as claimed in any preceding claim, wherein a power resource of the multiple distributed power resources (105; 205; 303; 605; 705) provides capacity for multiple virtual batteries (111; 409).

6. A method as claimed in any preceding claim, further including:
providing a database (107; 307; 407; 706) of distributed power resources (105; 205; 303; 605; 705) including data representing capacity and capabilities of respective ones of the resources (105; 205; 303; 605; 705);
augmenting (8) the database (107; 307; 407; 706) with additional resources on the basis of an offer (3) from a registered resource owner.

7. A method as claimed in claim 6, further including:
testing (7) physical access of the additional resources; and
updating (8) the data representing capabilities for the tested resources.

8. A computer program product, comprising a computer usable medium having computer readable program code embodied therein, said computer readable program code adapted to be executed to implement a method for power allocation from multiple distributed power resources as claimed in any preceding claim.

9. A resource management system, comprising:
multiple physical power storage devices (105; 205; 303; 605; 705) to support at least one virtual battery device (111; 409), the virtual battery (111; 409) being instantiated in response to a capacity allocation request (1) received from a subscriber (103; 203; 401; 601; 701);
an authentication engine to control access to the virtual battery device (111; 409) by the subscriber (103; 203; 401; 601; 701) and to enable a resource owner to offer (3) a physical battery capacity derived from at least one of the multiple distributed power resources (105; 205; 303; 605; 705);
wherein the capacity allocation request (1) defines the battery capacity the subscriber (103; 203; 401; 601; 701) is seeking.

10. A system as claimed in claim 9, further including a subscriber side contracting engine to:
receive the capacity allocation request (1) received from a subscriber (103; 203; 401; 601; 701); and
check available physical resources (105; 205; 303; 605; 705) based on the capacity allocation request (1) to determine if a request for allocation of capacity of physical resources (105; 205; 303; 605; 705) can be accommodated.

11. A system as claimed in claim 10, further including a device side contracting engine to receive offers (3) from device owners or their representative instances.

12. A system as claimed in claim 11, wherein the device side contracting engine works independently from the subscriber side contracting engine

13. A system as claimed in any claims 10 to 12, wherein the system is operable to instantiate the virtual battery device (111; 409) and allocate a share of capacity of one or more of the physical power storage devices to the virtual battery device (111; 409) to accommodate the request for allocation.

14. A system as claimed in any of claims 9 to 13, further including:
a monitor engine to determine a status of a power storage device and update a database (107; 307; 407; 706) of physical resource capacity.

15. A system as claimed in claim 14, wherein the monitor engine is further operable to determine the status of a physical resource in response to data received from a subscriber (107; 307; 407; 706) relating to virtual battery device usage.

## Patentansprüche

1. Computerimplementiertes Verfahren zur Leistungszuweisung von multiplen verteilten Leistungsressourcen (105; 205; 303; 605; 705), umfassend:
einem bei einem Zuweisungssystem (101; 201; 305; 403; 603) registrierten Abonnenten (103; 203; 401; 601; 701) Zugang zu einer virtuellen Batterie (111; 409) verschaffen, der ein Anteil an einer Kapazität einer physischen Batterie zugewiesen ist, abgeleitet von mindestens einer der multiplen verteilten Leistungsressourcen (105; 205; 303; 605; 705), wobei die Kapazitätszuweisungsanfrage (1) die vom Abonnenten (103; 203; 401; 601; 701) begehrte Batteriekapazität definiert.

2. Das Verfahren nach Anspruch 1, weiterhin umfassend:
das Authentifizieren des Abonnenten (103; 203; 401; 601; 701) im Zuweisungssystem (101; 201; 305; 403; 603); und
dem Abonnenten (103; 203; 401; 601; 701) auf der Grundlage der Zuweisungsanfrage (1) ein Zuweisungsangebot (3) über eine Kapazität unterbreiten.

3. Das Verfahren nach Anspruch 1 oder 2, weiterhin umfassend:
das Generieren einer Maßangabe, welche den Status (5) verfügbarer physischer Ressourcen der multiplen verteilten Leistungsressourcen (105; 205; 303; 605; 705) repräsentiert;
das Speichern der Maßangabe als Teil des Zuweisungssystems (101; 201; 305; 403; 603).

4. Verfahren nach einem jeglichen der vorgenannten Ansprüche, wobei der virtuellen Batterie (111; 409) ein Anteil an der physischen Batteriekapazität der entsprechenden aus der Vielzahl der multiplen verteilten Leistungsressourcen (105; 205; 303; 605; 705) zugewiesen wird.

5. Verfahren nach einem jeglichen der vorgenannten Ansprüche, wobei eine Leistungsressource der multiplen verteilten Leistungsressourcen (105; 205; 303; 605; 705) multiple virtuelle Batterien (111; 409) mit Kapazität versorgt.

6. Verfahren nach einem beliebigen der vorstehenden Ansprüche, weiterhin umfassend:
Bereitstellen einer Datenbank (107; 307; 407; 706) verteilter Leistungsressourcen (105; 205; 303; 605; 705) mit Daten, die Kapazität und Leistungsstärke der entsprechenden Ressourcen (105; 205; 303; 605; 705) angeben;
Erweitern (8) der Datenbank (107; 307; 407; 706) um zusätzliche Ressourcen auf der Grundlage eines Angebots (3) eines registrierten Ressourceneigentümers.

7. Das Verfahren nach Anspruch 6, weiterhin umfassend:
Testen (7) der physischen Zugänglichkeit der zusätzlichen Ressourcen; und
Aktualisieren (8) der die Leistungsfähigkeit der getesteten Ressourcen wiedergebenden Daten.

8. Computerprogramm-Produkt, ein computerausführbares Medium mit einem computerlesbaren Programm umfassend, wobei besagtes computerlesbares Programm dafür ausgelegt ist, um zum Zweck des Implementierens eines Verfahrens für die Leistungszuweisung von multiplen verteilten Leistungsressourcen nach einem jeglichem der vorgenannten Ansprüche.

9. Ressaurcenverwaltungssystem, umfassend:
multiple physische Energiespeichergeräte (105; 205; 303; 605; 705) zur Unterstützung von mindestens einer virtuellen Batterievorrichtung (111; 109), wobei die virtuelle Batterie (111; 409) in Reaktion auf eine Kapazitätszuweisungsanfrage (1) instantiiert wird, die von einem Abonnenten (103; 203; 401; 601; 701) empfangen wird;
eine Authentifizierungsmaschine zur Steuerung des Zugangs des Abonnenten (103; 203; 401; 601; 701) zu einer virtuellen Batterievorrichtung (111; 409) und um einen Ressourceneigentümer in die Lage zu versetzen, physische Batteriekapazität anzubieten (3), die von mindestens einer der multiplen verteilten Leistungsressourcen (105; 205; 303; 605; 705) abgeleitet ist;
wobei die Kapazitätszuweisungsanfrage (1) die Batteriekapazität definiert, die der Abonnent (103; 203; 401; 601; 701) begehrt.

10. System nach Anspruch 9, weiterhin eine abonnentenseitige Vertragsabschlussmaschine für folgende Aufgaben umfassend:
Empfang der von einem Abonnenten (103; 203; 401; 601; 701) eingehenden Kapazitätszuweisungsanfrage (1); und
Prüfen verfügbarer physischer Ressourcen (105; 205; 303; 605; 705) auf der Grundlage der Kapazitätszuweisungsanfrage (1), um zu bestimmen, ob einer Anfrage für die Zuweisung einer Kapazität physischer Ressourcen (105; 205; 303; 605; 705) nachgekommen werden kann.

11. System nach Anspruch 10, weiterhin eine vorrichtungsseitige Vertragsabschlussmaschine für den Empfang von Angeboten (3) von Vorrichtungseigentümern oder deren Vertretern umfassend.

12. System nach Anspruch 11, wobei die vorrichtungsseitige Vertragsabschlussmaschine unabhängig von der abonnentenseitigen Vertragsabschlussmaschine funktioniert.

13. System nach einem jeglichen der Ansprüche 10 bis 12, wobei das System dafür ausgelegt ist, um die virtuelle Batterievorrichtung (111; 409) zu instantüeren und einen Kapazitätsanteil von einem oder mehreren physischen Energiespeichergeräten der virtuellen Batterievorrichtung (111; 409) zuzuweisen, um der Zuweisungsanfrage nachzukommen.

14. System nach einem beliebigen der Ansprüche 9 bis 13, weiterhin umfassend:
eine Überwachungsmaschine zum Bestimmen eines Status eines Energiespeichergeräts und zum Aktualisieren einer Datenbank (107; 307; 407; 706) für die physische Ressourcenkapazität.

15. System nach Anspruch 14, wobei die Überwachungsmaschine dafür ausgelegt ist, um in Reaktion auf VOM Abonnenten (103 ; 203 ; 401 ; 601 ; 701) empfangene Daten zur Nutzung der virtuellen Batterievorrichtung den Status einer physischen Ressource zu bestimmen.

## Revendications

1. Procédé mis en oeuvre par ordinateur pour l'attribution de puissance à partir de multiples ressources de puissance distribuées (105 ; 205 ; 303 ; 605 ; 705), comprenant l'étape suivante :
fournir à un abonné (103 ; 203 ; 401 ; 601 ; 701), enregistré dans un système d'attribution (101 ; 201 ; 305; 403 ; 603), l'accès à une batterie virtuelle (111 ; 409) à laquelle est attribuée une part de capacité de la batterie physique dérivée d'au moins une des multiples ressources de puissance distribuées (105 ; 205 ; 303 ; 605 ; 705), la batterie virtuelle (111 ; 409) étant instanciée sur la base d'une demande d'attribution de capacité (1) de l'abonné (103; 203 ; 401 ; 601 ; 701), la demande d'attribution de capacité (1) définissant la capacité de la batterie que l'abonné (103 ; 203 ; 401 ; 601 ; 701) recherche.

2. Procédé selon la revendication 1, comprenant en outre les étapes suivantes
authentifier l'abonné (103 ; 203 ; 401 ; 601 ; 701) avec le système d'attribution (101 ; 201 ; 305 ; 403 ; 603) ; et
fournir à l'abonné (103 ; 203 ; 401 ; 601 ; 701) une offre d'attribution (3) de capacité sur la base de la demande d'attribution (1).

3. Procédé selon la revendication 1 ou 2, comprenant en outre les étapes suivantes
générer une mesure représentant l'état (5) des ressources physiques disponibles à partir des multiples ressources de puissance distribuées (105 ; 205 ; 303 ; 605 ; 705) ;
stocker la mesure en tant que partie du système d'attribution (101 ; 201 ; 305 ; 403 ; 603).

4. Procédé selon l'une quelconque des revendications précédentes, dans lequel on attribue à la batterie virtuelle (111 ; 409) une part de capacité de la batterie physique à partir de ressources respectives parmi une pluralité des multiples ressources de puissance distribuées (105 ; 205 ; 303 ; 605 ; 705).

5. Procédé selon l'une quelconque des revendications précédentes, dans lequel une ressource de puissance des multiples ressources de puissance distribuées (105 ; 205 ; 303 ; 605 ; 705) fournit une capacité pour de multiples batteries virtuelles (111 ; 409).

6. Procédé selon l'une quelconque des revendications précédentes, comprenant en outre les étapes suivantes :
fournir une base de données (107 ; 307 ; 407 ; 706) de ressources de puissance distribuées (105 ; 205 ; 303 ; 605 ; 705) comprenant des données représentant la/les capacité(s) de ressources respectives parmi les ressources (105 ; 205 ; 303 ; 605 ; 705) ;
augmenter (8) la base de données (107; 307; 407; 706) avec des ressources supplémentaires sur la base d'une offre (3) d'un propriétaire de ressources enregistré.

7. Procédé selon la revendication 6, comprenant en outre les étapes suivantes :
tester (7) l'accès physique des ressources supplémentaires ; et
mettre à jour (8) les données représentant des capacités pour les ressources testées.

8. Produit de programme informatique, comprenant un support utilisable par ordinateur présentant un code de programme lisible par ordinateur intégré dans celui-ci, ledit code de programme lisible par ordinateur étant adapté pour être exécuté afin de mettre en oeuvre un procédé pour l'attribution de puissance à partir de multiples ressources de puissance distribuées selon l'une quelconque des revendications précédentes.

9. Système de gestion de ressources, comprenant :
de multiples dispositifs de stockage de puissance physiques (105 ; 205 ; 303 ; 605 ; 705) pour prendre en charge au moins un dispositif de batterie virtuelle (111 ; 409), la batterie virtuelle (111 ; 409) étant instanciée en réponse à une demande d'attribution de capacité (1) provenant d'un abonné (103 ; 203 ; 401 ; 601 ; 701);
un moteur d'authentification pour contrôler l'accès au dispositif de batterie virtuelle (111 ; 409) par l'abonné (103 ; 203 ; 401 ; 601 ; 701) et pour permettre à un propriétaire de ressources d'offrir (3) une capacité de la batterie physique dérivée d'au moins une des multiples ressources de puissance distribuées (105 ; 205 ; 303 ; 605 ; 705) ;
dans lequel la demande d'attribution de capacité (1) définit la capacité de la batterie que l'abonné (103 ; 203 ; 401 ; 601 ; 701) recherche.

10. Système selon la revendication 9, comprenant en outre un moteur de concession côté abonné pour :
recevoir la demande d'attribution de capacité (1) provenant d'un abonné (103 ; 203 ; 401 ; 601 ; 701) ; et
vérifier les ressources physiques disponibles (105 ; 205 ; 303 ; 605 ; 705) sur la base de la demande d'attribution de capacité (1) pour déterminer si une demande d'attribution de capacité de ressources physiques (105 ; 205 ; 303 ; 605 ; 705) peut être adaptée.

11. Système selon la revendication 10, comprenant en outre un moteur de concession côté dispositif pour recevoir des offres (3) provenant de propriétaires de dispositif ou de leurs instances représentatives.

12. Système selon la revendication 11, dans lequel le moteur de concession côté dispositif fonctionne indépendamment du moteur de concession côté abonné.

13. Système selon l'une quelconque des revendications 10 à 12, le système permettant d'instancier le dispositif de batterie virtuelle (111 ; 409) et d'attribuer une part de capacité d'un ou de plusieurs des dispositifs de stockage de puissance physiques au dispositif de batterie virtuelle (111 ; 409) pour adapter la demande d'attribution.

14. Système selon l'une quelconque des revendications 9 à 13, comprenant en outre : un moteur de surveillance pour déterminer un état d'un dispositif de stockage de puissance et mettre à jour une base de données (107 ; 307 ; 407 ; 706) de capacité de ressources physiques.

15. Système selon la revendication 14, dans lequel le moteur de surveillance permet en outre de déterminer l'état d'une ressource physique en réponse à des données provenant d'un abonné (103 ; 203 ; 401 ; 601 ; 701) relatives à l'utilisation du dispositif de batterie virtuelle.
